# DEMANDE DE BREVET EUROPEEN

(11) **EP 1 496 340 A1**
(43) Date de publication de la demande: **12.01.2005**
(21) Numéro de dépôt: 04291612.2
(22) Date de dépôt: 25.06.2004
(51) Int. Cl.: G01F 1/699, G01P 13/00, F04D 15/02

(54) **Débitmètre thermique et procédé correspondant**

(30) Priorité: 08.07.2003 FR 0308322
(71) Demandeur: POMPES SALMSON, 78400 Chatou (FR)
(72) Inventeur: Kernours, Michel, 35970 Mondevert (FR)
(74) Mandataire: Cabinet Hirsch

(57) **Abrégé**

L'invention concerne un détecteur de débit par dissipation thermique, une pompe munie d'un tel détecteur et un procédé de détection de débit par dissipation thermique. Selon l'invention, un circuit augmente la puissance thermique d'un élément chauffant (4) lorsqu'un différentiel de températures mesurées par un ensemble de capteurs de température (7,9) passe en dessous d'une première valeur seuil. L'élément chauffant (4) peut lui-même comprendre plusieurs éléments chauffants (3,5). Le circuit commande l'arrêt d'un moteur de pompe et diminue la puissance thermique de l'élément chauffant (4) lorsque le différentiel de températures mesurées passe au-dessus d'une deuxième valeur seuil.

## Description

L'invention concerne un détecteur et un procédé de détection de débit par dissipation thermique.

On connaît un dispositif de détection d'un débit dans une installation de pompage, reposant sur le principe de mesure d'un différentiel de températures. Le document EP-A-0 528 726 dévoile un dispositif de commande d'une installation de pompage, dans lequel un capteur de débit minimal est constitué par un élément chauffant appliqué sur la paroi extérieure de la conduite de refoulement de la pompe ; par un premier capteur de la température de la paroi extérieure de la conduite de refoulement, placé à une distance de l'élément chauffant suffisante pour ne pratiquement pas mesurer d'échauffement même en l'absence de circulation de liquide dans la conduite de refoulement ; par un deuxième capteur de la température de la paroi extérieure de la conduite de refoulement, placé à proximité de l'élément chauffant pour être chauffé par ce dernier lorsque aucun liquide ne circule dans la conduite de refoulement ; et par un circuit électrique et/ou électronique de comparaison de l'échauffement du premier capteur par rapport au deuxième, apte à déterminer par cette comparaison l'établissement d'un débit minimal de refoulement de la pompe.

Des inconvénients liés à un tel dispositif sont dus au manque d'intégration du dispositif, c'est-à-dire qu'il est nécessaire d'implanter les éléments sur la conduite de refoulement, distante du corps de la pompe, et de les raccorder électriquement au circuit de commande. Ce manque d'intégration des composants du dispositif de détection nuit à l'ergonomie d'une telle installation et risque en outre d'en affecter la durée de vie, si par exemple la mise en place des éléments n'est pas effectuée de manière optimale.

Il existe donc un besoin pour un dispositif et un procédé de détection d'un débit par dissipation thermique résolvant un tel problème.

L'invention a ainsi pour objet un détecteur de débit par dissipation thermique, avec un élément chauffant, aux moins deux capteurs de température et un circuit adapté à varier la puissance thermique de l'élément chauffant en fonction des températures mesurées par les capteurs.

Dans des modes de réalisation préférés, l'invention comprend une ou plusieurs des caractéristiques suivantes :
- l'élément chauffant comprend une première résistance de puissance thermique sensiblement constante et une deuxième résistance, le circuit variant la puissance thermique du deuxième élément chauffant en fonction des températures mesurées par les capteurs ;
- l'élément chauffant et l'ensemble de capteurs sont disposés sur une plaque en céramique ;
- l'élément chauffant et un premier capteur sont disposés sur une première plaque en céramique, et dans lequel un deuxième capteur est disposé sur une deuxième plaque en céramique ;
- l'élément chauffant et l'ensemble de capteurs sont surmoulés dans un bloc élastomère ;
- l'élément chauffant, l'ensemble de capteurs et le circuit sont agencés dans un même module ; et
- l'élément chauffant et l'ensemble de capteurs sont agencés dans un même module, et dans lequel le circuit est dans une boite à bornes.

L'invention a également pour objet une pompe comprenant le détecteur de débit selon l'invention.

Dans des modes de réalisation préférés, l'invention comprend une ou plusieurs des caractéristiques suivantes :
- l'élément chauffant comprend un élément chauffant alimenté en parallèle avec un moteur de la pompe ;
- le module est agencé sur ou dans le corps de la pompe ;
- le module est au niveau de la conduite d'aspiration de la pompe ; et
- le module est au niveau de la conduite de refoulement de la pompe.

L'invention a également pour objet un procédé de détection de débit par dissipation thermique, comprenant la fourniture d'un détecteur selon l'invention, dans lequel procédé le circuit :
- augmente la puissance thermique de l'élément chauffant lorsque le différentiel de températures mesurées par les capteurs passe en dessous d'une première valeur seuil ; et
- commande l'arrêt d'un moteur de pompe et diminue la puissance thermique de l'élément chauffant lorsque le différentiel de température passe au-dessus d'une deuxième valeur seuil.

Dans des modes de réalisation préférés, l'invention comprend une ou plusieurs des caractéristiques suivantes :
- le circuit commande la mise en marche d'un moteur de pompe lorsque le différentiel passe en dessous d'une première valeur seuil ; et
- le circuit alimente un élément chauffant de l'élément chauffant en parallèle avec la marche du moteur de pompe.

D'autres caractéristiques et avantages de l'invention apparaîtront à la lecture de la description qui suit de modes de réalisation préférés de l'invention, donnée à titre d'exemple et en référence aux dessins annexés qui montrent :
- Figure 1 : un schéma d'une partie d'un détecteur de débit par dissipation thermique ;
- Figure 2 : une illustration schématique d'un circuit de commande d'un moteur de pompe ;
- Figure 3 : un cycle de fonctionnement d'une pompe munie d'un détecteur de débit par dissipation thermique ;
- Figure 4 : une vue en coupe du corps d'une pompe à dispositif de détection de débit intégré ; et
- Figure 5 : une vue de face, en coupe, d'un module comprenant un détecteur de débit.

L'invention propose un détecteur de débit par dissipation thermique, avec un élément chauffant, aux moins deux capteurs de température et un circuit adapté à varier la puissance thermique de l'élément chauffant en fonction des températures mesurées par les capteurs. Un premier capteur est disposé à distance d'influence de l'élément chauffant et un deuxième capteur est, lui, disposé à distance de non influence de l'élément chauffant. Le circuit établit un différentiel de températures mesurées par les capteurs. Il augmente la puissance thermique de l'élément chauffant lorsque le différentiel établi passe en dessous d'une première valeur seuil. Il peut éventuellement commander la mise en marche d'un moteur lorsque le différentiel établi passe en dessous d'une valeur seuil. Le passage du différentiel en dessous d'une première valeur seuil indique l'apparition d'un débit de fluide. L'augmentation de la puissance thermique de l'élément chauffant permet d'accroître la fiabilité de la mesure du différentiel de températures lors de l'arrêt du débit, même lorsque des turbulences de fluide se produisent au niveau du détecteur de débit. Il est donc possible d'intégrer le détecteur de débit directement dans le corps d'une pompe, dans lequel des turbulences se produisent lors de l'arrêt du débit. Le circuit commande l'arrêt du moteur de pompe et diminue la puissance thermique de l'élément chauffant lorsque le différentiel de température passe au-dessus d'une deuxième valeur seuil, indiquant l'arrêt d'un débit. L'arrêt de débit peut ainsi être détecté malgré d'éventuelles turbulences, évitant ainsi que la pompe ne fonctionne en l'absence de débit, ce qui pourrait l'endommager. On obtient, ce faisant, un détecteur de débit intégré à la pompe, permettant en outre de supprimer les inconvénients liés au manque d'intégration. Il n'est donc plus nécessaire d'implanter les éléments sur la conduite de refoulement, distante du corps de la pompe, et de les raccorder électriquement au circuit. L'ergonomie d'une installation de pompage munie d'un tel détecteur est ainsi améliorée. Les éléments du détecteur peuvent être mis en place selon un processus industriel automatisé, ce qui augmente la durée de vie du détecteur.

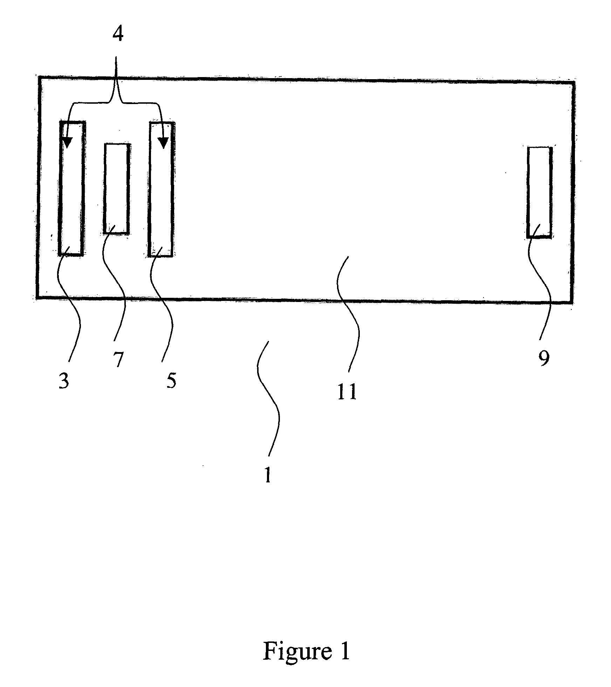

La figure 1 montre un schéma d'une partie d'un détecteur 1 de débit par dissipation thermique. Ce détecteur comprend un premier élément chauffant 4, de puissance thermique constante, et un deuxième élément chauffant 5. Chacun de ces deux éléments comprend une résistance électrique, pouvant dégager une puissance thermique généralement comprise entre 1 et 5 watts. Par conséquent, on utilisera ci-après indifféremment le terme « résistance » ou « élément chauffant ». Le dispositif comprend également deux capteurs de température à résistance électrique variable en fonction de la température (ou thermistances) 7 et 9. Chacun de ces éléments peut être disposé d'un coté d'une plaque 11. Cette plaque peut par exemple être en céramique et avoir une épaisseur comprise entre 0,5 et 3 mm et de préférence entre 0,8 et 1,2 mm. La plaque 11 est destinée à être montée de façon étanche vis à vis du circuit de fluide, c'est-à-dire, qui n'est pas susceptible d'induire une fuite ou une corrosion. Dans une variante, les éléments chauffants 3,5 et les capteurs peuvent être disposés sur des plaques distinctes. Par exemple, l'élément chauffant 4 et le premier capteur de température 7 peuvent être disposés sur une première plaque en céramique et le deuxième capteur 9 peut être disposé sur une deuxième plaque en céramique. La première thermistance 7 est placée en aval ou en amont (par rapport au sens d'écoulement du fluide) et à proximité de la résistance 3 pour pouvoir en mesurer l'influence thermique. La deuxième résistance 5 est de préférence disposée de telle sorte que la thermistance 7 se situe entre les deux résistances 3 et 5. Il convient de noter que la présence de deux résistances 3,5 permet d'homogénéiser localement la température du fluide, au niveau de la thermistance 7, et ainsi d'améliorer la fiabilité de la température mesurée par la thermistance 7. La seconde thermistance 9 est située à distance de non-influence de la résistance du triplet formé par les éléments 3,5 et 7, par rapport au sens d'écoulement du fluide et n'est en conséquence pas ou très peu sensible à l'influence des résistances 3 et 5, même en l'absence d'écoulement.

Dans un mode de réalisation, les résistances 3,5 sont obtenues par sérigraphie, c'est-à-dire par dépôt d'encre sur la plaque 11. Les thermistances sont des composants pour montage en surface, de préférence rectangulaire. Ces composants électroniques sont miniaturisés et prennent la forme d'une pastille qui est soudée ou collée sur la plaque 11. La plaque est, dans ce mode de réalisation, en céramique, a une épaisseur de 1 mm. Un exemple de dimensionnement selon le plan de la plaque 11 est le suivant. La plaque présente une largeur de 14 mm pour une longueur de 34 mm. Les résistances 3,5 présentent une largeur voisine de 2 mm pour une longueur de 8 mm. Les thermistances 7,9 ont une largeur voisine de 1,5 mm et une longueur voisine de 6 mm. Les distances de séparation entre la résistance 3 et la thermistance 7 et entre la thermistance 7 et la résistance 5 est de l'ordre de 1 mm. L'écartement entre la résistance 5 et la thermistance 9 est de 22 mm.

Selon une variante, les thermistances sont, elles aussi, obtenues par sérigraphie.

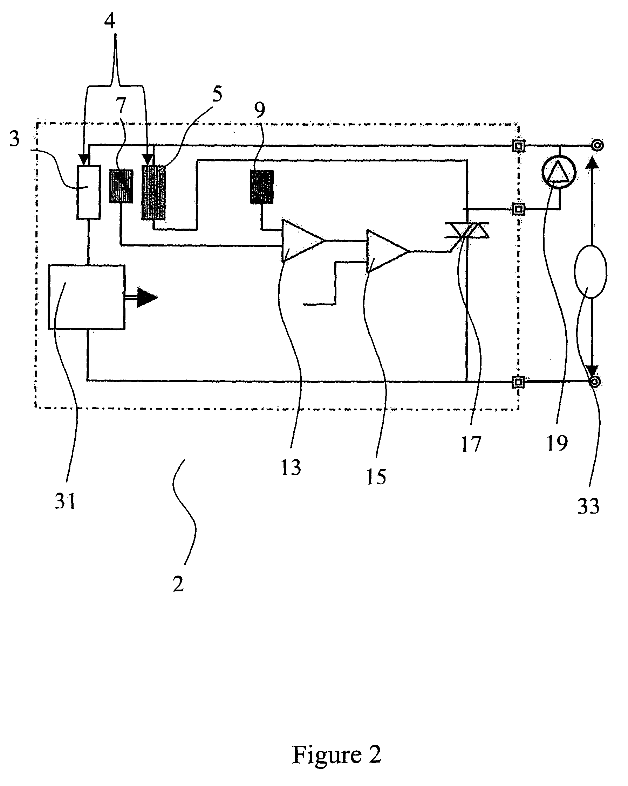

La figure 2 illustre de façon schématique un circuit de commande d'un moteur de pompe. Les éléments chauffants 3,5 sont ceux représentés sur la figure 1. Le premier élément chauffant 3 est alimenté de façon permanente, de sorte que la puissance thermique dégagée par cet élément soit constante, à des fluctuations de courant près. Le deuxième élément chauffant 5 est alimenté par le circuit 2 selon un profil d'alimentation variable. Les deux capteurs de température à résistance électrique variable en fonction de la température (ou thermistances) 7,9 sont également alimenté par le circuit 2. Ce circuit comprend également une tension d'alimentation 31 et un premier amplificateur opérationnel 13 raccordant les thermistances 7,9. Ce premier amplificateur opérationnel 13 permet d'établir un différentiel de températures ΔT mesurées par les thermistances 7,9. Ce premier amplificateur opérationnel 13 relie un deuxième amplificateur opérationnel 15 effectuant la comparaison de ΔT avec une référence donnée. Le circuit comprend également un triac 17, assurant l'interruption commandée du circuit de démarrage du moteur de la pompe, ainsi qu'une alimentation générale 33 (par exemple une alimentation secteur). L'élément chauffant 5 est alimenté selon un profil d'alimentation variable dépendant de l'état du triac 17.

Dans un mode de réalisation, l'élément chauffant 3 est alimenté de façon permanente par le réseau, dès le raccordement du détecteur au réseau, permettant ainsi une limitation en courant du générateur de tension 31 alimentant le circuit 2.

Selon une variante, l'élément chauffant 3 est alimenté de façon permanente par le circuit 2.

Ainsi, la fonction de ce circuit 2 est tout d'abord d'établir un différentiel de températures mesurées par les capteurs 7,9. L'alimentation de la résistance 3 permet l'établissement d'un différentiel de température stable en l'absence de débit de fluide. Lors de l'apparition d'un débit, le différentiel de température chute. Le circuit 2 commande la mise en marche du moteur de pompe et augmente la puissance thermique de l'élément chauffant 4 (et en particulier de l'élément chauffant 5) lorsque le différentiel établi passe en dessous d'une première valeur seuil. Notons cependant que la mise en marche du moteur peut en variante être faite de façon indépendante de la détection de débit par le détecteur. Ensuite, le circuit 2 commande l'arrêt du moteur de pompe et diminue la puissance thermique de l'élément chauffant 4 lorsque le différentiel de température passe au-dessus d'une deuxième valeur seuil, indiquant l'arrêt d'un débit. Plus précisément, dans le mode de réalisation présent, l'alimentation de la deuxième résistance cesse et seule la première résistance continu d'être alimentée. Ce circuit est représenté à titre indicatif mais il est évident que des circuits de commande différents peuvent assurer une fonction équivalente à celle du présent circuit 2.

Augmenter la puissance thermique de l'élément chauffant 4, comporte de multiples avantages. En effet, des turbulences peuvent se produire lorsque le débit cesse. Ces turbulences peuvent gêner la détection de l'arrêt du débit, c'est-à-dire gêner la mesure d'un différentiel de température dépassant une deuxième valeur seuil. Par exemple, intégrer le dispositif selon EP-A-0 528 726 (lequel ne comporte qu'une résistance constante) dans le corps de la pompe occasionne des inconvénients. Après la fermeture d'un robinet ou d'un obturateur quelconque, le débit redevient nul alors que la pompe continue de fonctionner. Ceci provoque l'apparition de turbulences. Les turbulences troublent à leur tour la mesure du différentiel de température et retardent, voire empêche, l'arrêt de la pompe lorsque le détecteur ne comporte qu'une résistance constante. Or, une telle situation n'est pas souhaitable car elle peut causer des dommages irréparables pour la pompe, comme il est connu de l'homme du métier. Grâce à l'invention, l'augmentation de la puissance thermique globale de l'élément chauffant 4 permet d'accentuer le différentiel de températures détectées et ainsi d'accroître la fiabilité de détection de l'arrêt du débit, même lorsque des turbulences de fluide se produisent au niveau du détecteur. Il devient donc possible d'intégrer le détecteur de débit directement dans le corps d'une pompe, dans lequel des turbulences peuvent se produire lors de l'arrêt du débit, et de disposer d'un détecteur de débit fiable, évitant que la pompe ne fonctionne à débit nul.

La deuxième résistance 5 est alimentée électriquement en parallèle avec le moteur de pompe (électrique) dans un mode de réalisation. Toutefois, le profil d'alimentation de l'élément chauffant, considéré dans son ensemble, peut prendre des formes variées, selon que le dispositif de détection inclut une ou plusieurs résistances. Par exemple, les profils d'augmentation ou de diminution de puissance de l'élément chauffant 4 peuvent être linéaires, quadratiques, exponentiels etc.

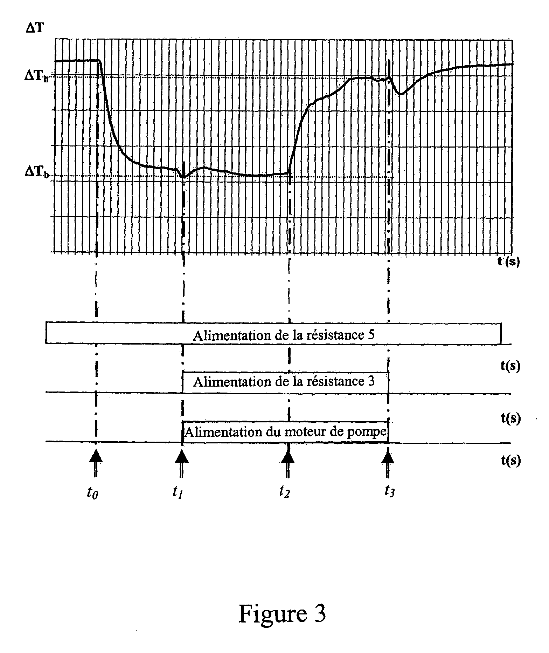

La figure 3 représente un cycle de fonctionnement d'une pompe munie d'un détecteur de débit par dissipation thermique, en fonction de la mesure du différentiel de température ΔT. A un instant *t*_{*0*}*,* l'ouverture d'un obturateur quelconque dans une installation sanitaire provoque l'apparition d'un débit qui entraîne à son tour une chute de ΔT en dessous d'une première valeur seuil basse ΔT_{*b*}. Cette chute est détectée à un instant *t*_{*1*} grâce au circuit 2, lequel commande alors la mise en marche du moteur de la pompe ainsi que l'alimentation de la résistance 5. La différence *Δt*_{*1,0*} *= t*_{*1*} *- t*_{*0*} correspond au délai de détection de l'apparition d'un flux et est typiquement de l'ordre de 3 à 4 secondes. La fermeture de l'obturateur à un instant ultérieur *t*_{*2*}, provoque un ralentissement puis l'arrêt du débit, entraînant alors une remontée du différentiel de température. Lorsque celui-ci dépasse une deuxième valeur seuil haute ΔT_{*h*} détectée par le circuit à un instant *t*_{*3*}*,* le circuit commande l'arrêt du moteur de la pompe et de l'alimentation de la résistance 5. Il convient de noter que l'arrêt ne sera effectif que si *Δt*_{*3,2*} *= t*_{*3*} *- t*_{*2*} est supérieur à un délai de temporisation *Δt*_{*D*} judicieusement choisi selon l'installation sanitaire et d'autres critères comme la fréquence escomptée de sollicitation de cette installation, le nombre d'utilisateurs potentiel etc. (typiquement Δ*t*_{*D*} = 20 secondes). Le différentiel ΔT se stabilise ensuite et l'installation de pompage est prête pour un nouveau cycle de fonctionnement. On comprend que si le dispositif n'est pourvu que d'une seule résistance, cette résistance peut jouer le rôle cumulé des deux résistances 3,5 du présent mode de réalisation. Autrement dit, l'alimentation de cette résistance peut osciller entre une valeur basse et une valeur haute en corrélation avec la marche du moteur de la pompe et selon des profils prédéterminés d'augmentation et de diminution de puissance thermique. On a appelé les valeurs seuils ΔT_{*h*} et ΔT_{*b*} respectivement valeur seuil haute et basse. Notons cependant que l'invention peut être mise en oeuvre avec une valeur seuil ΔT_{*b*} qui est inférieure, égale ou supérieur à la valeur seuil ΔT_{*h*}.

Un exemple de dimensionnement de cycle de fonctionnement est le suivant. Lorsque le débit est nul et stabilisé (la pompe étant à l'arrêt), la thermistance 7 indique une température de 31°C pour une dissipation thermique dans les résistances allant de 1 à 1,5 W et une température du fluide de 15°C. Cette dernière température correspond à la valeur mesurée par la thermistance 9. Suite à l'apparition d'un faible débit de fluide (2 litres / min) et après un délai de 3 s, la température mesurée par la thermistance 7 est de 27°C, la température mesurée par la thermistance 9 restant de 15°C. Une diminution ou une augmentation de 4 à 5°C est suffisante et détectable par le détecteur de façon reproductible pour des températureS de fluide allant de 5 à 60°C. Une légère dérive de la différence de température est cependant observée pour des températures de fluides très différentes, à l'intérieur de la plage précédente. Cependant, les valeurs seuils ΔT_{*h*} et ΔT_{*b*} peuvent être facilement ajustées en conséquence.

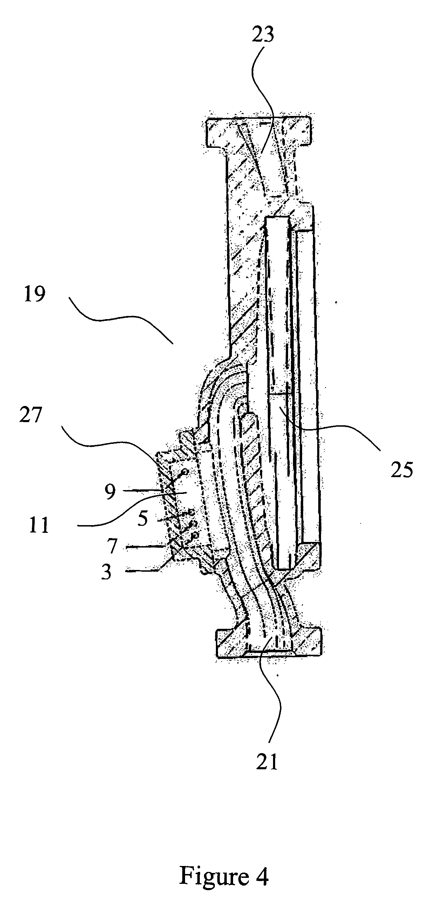

La figure 4 représente une vue en coupe du corps d'une pompe à dispositif de détection de débit intégré. La pompe 19 comprend : un corps 20, une roue à aubes ou un rotor 25, une conduite d'aspiration 21 et une conduite de refoulement 23. La figure 4 montre également une partie de détecteur 1 de débit selon l'invention agencé dans le corps 20 de la pompe 19. Le détecteur 1 comprend un élément chauffant 4 comprenant lui-même deux éléments chauffants 3,5. Le détecteur 1 comprend également deux capteurs de température 7,9. Les éléments 3,5 et les capteurs 7,9 sont disposés sur une plaque 11, par exemple en céramique, et sont agencés dans un même module 27, dans l'exemple illustré sur la figure 4. Un circuit (non-représenté), destiné à commander la mise en marche du moteur de la pompe 19 et raccordant les éléments chauffants 3,5, est agencé dans le même module 27 que les éléments 3,5 et les capteurs 7,9. Selon une variante, le circuit peut être délocalisé dans une boite à bornes (non-représentée). Ce module 27 peut éventuellement être encastrable dans le corps 20 de la pompe 19, par exemple dans un réceptacle standard. Ainsi, un même type de module, fabriqué en série, peut équiper des pompes de caractéristiques différentes. Le détecteur 1 de débit est dans un mode de réalisation disposé dans le corps 20 de la pompe 19, au niveau de la conduite d'aspiration 21. Il peut cependant, selon une variante, être agencé sur une paroi de la conduite de refoulement 23 de la pompe. Il pourrait en outre être agencé sur ou dans une paroi du corps 20 de la pompe 19, au niveau de la conduite de refoulement 23 de la pompe.

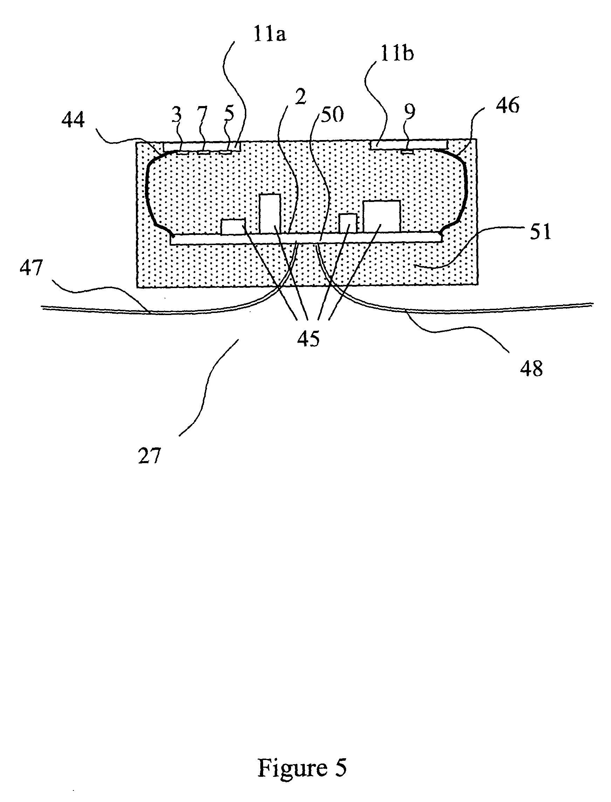

La figure 5 montre une vue de face, en coupe d'un module comprenant un détecteur de débit. Le module 27 comprend un détecteur, comprenant lui-même deux éléments chauffants 3,5 et deux capteurs de température 7,9. Dans un mode de réalisation, les éléments 3,5 et le capteur de température 7 sont disposés sur une même plaque 11a, en céramique, le capteur 9 étant disposé sur une plaque distincte 11b. Les éléments 3,5 et les capteurs 7,9 sont disposés d'un côté des plaques 11a,11b, vers l'intérieur d'un module 27 dans lequel sont également agencées les deux plaques 11a, 11b. Ces plaques sont en céramique et ont une épaisseur comprise entre 0,5 et 3 mm. Le module 27 comprend également un circuit destiné à commander la mise en marche du moteur de la pompe 19. Le circuit est imprimé sur une carte 50, éventuellement flexible, et les composants du circuit sont implantés sur le circuit imprimé. Ces composants ont été décrits en référence à la figure 2 et sont repérés sur la figure 5 par le numéro général 45. Le module 27 est relié au secteur par un câble d'alimentation 47 et est relié à un moteur de pompe par un câble de liaison 48. Le circuit 2 est relié à chacune des plaques 11a, 11b par une limande 44,46. Les plaques 11a,11b, les limandes 44,46 et la carte 50 sont surmoulées dans un bloc élastomère 51. Le côté des plaques 11a, 11b en contact avec le fluide n'est pas recouvert par l'élastomère. Une partie des câbles 47,48 est également surmoulée dans le bloc élastomère 51. Le module 27 est encastrable de façon étanche dans un réceptacle prévu dans un corps de pompe, c'est-à-dire que l'étanchéité est assurée après l'encastrement du module dans le réceptacle prévu à cet effet.

Selon une variante, les câbles 47,48 ne sont pas surmoulés dans le bloc élastomère 51 mais une trappe est disposée sur une surface inférieure du module 27. Cette trappe est accessible depuis l'extérieur afin de permettre le raccordement des câbles 47,48 au circuit imprimé. Le module est également encastrable de façon étanche dans un corps de pompe.

Selon une autre variante, le module 27 comprend deux fiches accessibles depuis l'extérieur du module. Le module est également encastrable de façon étanche dans un corps de pompe. Les câbles 47,48 ne sont pas surmoulés dans le bloc élastomère 51. Ces câbles sont munis de fiches complémentaires des fiches du module afm de permettre un raccordement simple lors de l'installation du module.

Le bloc 51 assure le maintien du détecteur. Il assure également l'étanchéité du détecteur vis-à-vis d'un fluide en contact avec le détecteur du côté des plaques 11a, 11b. L'utilisation de deux plaques 11a, 11b distinctes permet d'éviter le phénomène de pont thermique entre les points de mesures correspondant aux capteurs 7 et 9. Ceci est particulièrement avantageux lorsque la plage de température du fluide s'étend au-delà de 5 à 60°C (par exemple 5 à 85°C et plus). Il convient cependant de noter que l'utilisation de deux plaques distinctes n'est pas nécessaire dans la plage de températures allant de 5 à 60°C.

Le détecteur de débit et le procédé de détection de débit par dissipation thermique selon l'invention peuvent s'appliquer de façon avantageuse au démarrage d'une pompe de surpression dans les installations d'eau sanitaire et à usage domestique ou collectif, lorsque la pression est insuffisante, par exemple lorsque celle-ci est uniquement générée par la hauteur d'un réservoir placé dans la partie supérieure d'une habitation collective ou d'un immeuble. L'invention trouve une autre application dans l'augmentation de pression dans les installations domestiques, par exemple des installations auxquelles on ajoute une ou plusieurs cabine(s) de thalassothérapie domestique à rampes de jets.

L'invention n'est cependant pas limitée aux variantes décrites ci-dessus mais est susceptible de nombreuses autres variations aisément accessibles à l'homme du métier.

## Revendications

1. Un détecteur de débit par dissipation thermique, avec :
- un élément chauffant (4) ;
- aux moins deux capteurs de température (7, 9) ; et
- un circuit (2) adapté à varier la puissance thermique de l'élément chauffant (4) en fonction des températures mesurées par les capteurs.

2. Le détecteur de débit de la revendication 1, dans lequel l'élément chauffant (4) comprend une première résistance (3) de puissance thermique sensiblement constante et une deuxième résistance (5), le circuit variant la puissance thermique de la deuxième résistance (5) en fonction des températures mesurées par les capteurs.

3. Le détecteur de débit de l'une quelconque des revendications précédentes, dans lequel l'élément chauffant (4) et l'ensemble de capteurs (7,9) sont disposés sur une plaque en céramique (11).

4. Le détecteur de débit de l'une quelconque des revendications 1 à 3, dans lequel l'élément chauffant (4) et un premier capteur (7) sont disposés sur une première plaque en céramique (11a), et dans lequel un deuxième capteur (9) est disposé sur une deuxième plaque en céramique (11b).

5. Le détecteur de débit de l'une quelconque des revendications précédentes, dans lequel l'élément chauffant (4) et l'ensemble de capteurs (7,9) sont surmoulés dans un bloc élastomère (51).

6. Le détecteur de débit de l'une quelconque des revendications précédentes, dans lequel l'élément chauffant (4), l'ensemble de capteurs (7,9) et le circuit (2) sont agencés dans un même module (27).

7. Le détecteur de débit de l'une quelconque des revendications 1 à 5, dans lequel l'élément chauffant (4) et l'ensemble de capteurs (7,9) sont agencés dans un même module (27), et dans lequel le circuit (2) est dans une boite à bornes.

8. Pompe (19) comprenant le détecteur de débit de l'une quelconque des revendications 1 à 7.

9. La pompe (19) de la revendication 8, dans laquelle l'élément chauffant (4) comprend un élément chauffant (5) alimenté en parallèle avec un moteur de la pompe.

10. Pompe (19) comprenant le détecteur de débit de la revendication 6 ou 7, dans laquelle le module est agencé sur ou dans le corps (20) de la pompe (19).

11. La pompe (19) de la revendication 10, dans laquelle le module est au niveau de la conduite d'aspiration (21) de la pompe (19).

12. La pompe (19) de la revendication 10, dans laquelle le module est au niveau de la conduite de refoulement (23) de la pompe (19).

13. Un procédé de détection de débit par dissipation thermique, comprenant la fourniture d'un détecteur selon l'une quelconque des revendications 1 à 7, dans lequel procédé le circuit (2) :
- augmente la puissance thermique de l'élément chauffant (4) lorsque le différentiel de températures mesurées par les capteurs (7,9) passe en dessous d'une première valeur seuil ; et
- commande l'arrêt d'un moteur de pompe et diminue la puissance thermique de l'élément chauffant (4) lorsque le différentiel de température passe au-dessus d'une deuxième valeur seuil.

14. Procédé selon la revendication 13, dans lequel le circuit (2) :
- commande la mise en marche d'un moteur de pompe lorsque le différentiel passe en dessous d'une première valeur seuil.

15. Un procédé de détection selon la revendication 14, dans lequel le circuit alimente un élément chauffant (5) de l'élément chauffant (4) en parallèle avec la marche du moteur de pompe.
